Europäisches Patentamt

European Patent Office

Office européen des brevets

(19)

(11) Numéro de publication: **0 046 431**
A1

(12) ## DEMANDE DE BREVET EUROPEEN

(21) Numéro de dépôt: **81401279.5**

(22) Date de dépôt: **07.08.81**

(51) Int. Cl.³: **F 15 B 13/02,** F 15 B 5/00,
F 15 C 3/14, F 16 K 31/00

(30) Priorité: **19.08.80 FR 8018125**

(43) Date de publication de la demande: **24.02.82**
**Bulletin 82/8**

(84) Etats contractants désignés: **AT BE CH DE FR GB IT LI**
**LU NL SE**

(71) Demandeur: **SOCIETE D'OPTIQUE, PRECISION**
**ELECTRONIQUE ET MECANIQUE - SOPELEM, 102 rue**
**Chaptal, F-92300 Levallois-Perret (FR)**

(72) Inventeur: **Cerneau, Michel, 14 rue du Clos de l'Abbaye,**
**F-92160 Antony (FR)**

(74) Mandataire: **Saint-Martin, René et al,**
**CREUSOT-LOIRE 15 rue Pasquier, F-75383 Paris**
**Cedex 08 (FR)**

(54) **Servo-valve électro-hydraulique.**

(57)  La présente invention se rapporte à une servovalve électrohydraulique comportant au moins un étranglement variable contrôlé par un signal électrique de faible puissance de manière à contrôler un débit ou une pression hydraulique.

La servovalve selon l'invention comporte au moins une buse fixée dans un corps et alimentée en liquide hydraulique et elle est essentiellement caractérisée par le fait qu'elle comporte un transducteur piézo électrique (3) constitué par un moins un transducteur élémentaire (31) formé par une pastille en céramique piézoélectrique enserrée entre deux électrodes et tenu dans le corps (2) face à l'orifice de la buse (11 ou 12), sensiblement perpendiculairement à l'axe (13) de cette buse, de manière que la déformation du transducteur (3) sous l'action d'un signal électrique appliqué aux électrodes modifie la distance entre l'orifice de ladite bus e (11, 12) et le transducteur (3).

Cette servovalve constitue un potentiomètre hydraulique simple ou double ou un étranglement variable.

"Servo-valve électro-hydraulique"

La présente invention se rapporte à une servovalve électro-hydraulique comportant au moins un étranglement variable contrôlé par un signal électrique de faible puissance de manière à contrôler un débit ou une pression hydraulique. Cette servovalve constitue un potentiomètre hydraulique simple ou double ou un étranglement variable.

Les étranglements variables sont largement utilisés dans les servovalves électro-hydrauliques car ils permettent de moduler soit le débit à perte de charge donnée soit de modifier la perte de charge à débit donné. Un potentiomètre hydraulique simple ne comporte qu'un seul étranglement variable alimenté au travers d'un étranglement fixe à une pression donnée et permet de moduler la pression sur une sortie située entre l'étranglement fixe et l'étranglement variable. Un potentiomètre hydraulique double qui constitue généralement le premier étage d'une servovalve associe deux étranglements variables alimentés à partir d'une source de pression commune, chacun au travers d'un étranglement fixe. Il permet de moduler les pressions sur deux sorties branchées chacune entre un étranglement fixe et un étranglement variable.

L'étranglement variable du type buse-palette ou gicleur-palette est largement utilisé. La palette est déplacée selon l'axe de la buse de manière à faire varier la distance entre la buse et la palette. La palette est déplacée par un moteur couple dont l'armature oscille dans un plan passant par l'axe de la buse, la palette étant liée à l'armature par une tige. Un ressort ramène la palette en position neutre. Ce moteur couple est un composant complexe et onéreux.

La présente invention a pour objet une servovalve comprenant au moins un étranglement variable du type buse-obturateur ou gicleur-palette contrôlé par un transducteur piezoélectrique. Cette servovalve ne nécessite pas de moteur couple, ni de liaison entre le moteur et l'obturateur, ni de ressort de rappel et son prix est de ce fait réduit. L'étranglement variable est réalisé par des composants n'introduisant pas de frottement.

La servovalve selon l'invention comporte au moins une buse fixée dans un corps et alimentée en liquide hydraulique et elle est essentiellement caractérisée par le fait qu'elle comporte un transducteur piézo-électrique constitué par au moins un transducteur élémentaire formée par une pastille en céramique piézo électrique enserrée entre deux électrodes et tenue dans le corps face à l'orifice de la buse, sensiblement perpendiculairement à l'axe de cette buse, de manière que la déformation du transducteur sous l'action d'un signal électrique appliqué aux électrodes modifie
la distance entre l'orifice de ladite buse et le transducteur.

L'invention va maintenant être décrite avec plus de détails en
se référant à des modes de réalisation donnés à titre d'exemples et représentés par les dessins annexés.

La figure 1 est une coupe d'une servovalve du type potentiomètre
hydraulique double.

La figure 2 est une coupe d'une servovalve du type potentiomètre
hydraulique simple.

La figure 3 est une coupe d'un autre mode de réalisation d'une
servovalve du type potentiomètre hydraulique double.

La figure 4 est une coupe d'une servovalve du type potentiomètre
hydraulique simple dérivée de la figure 3.

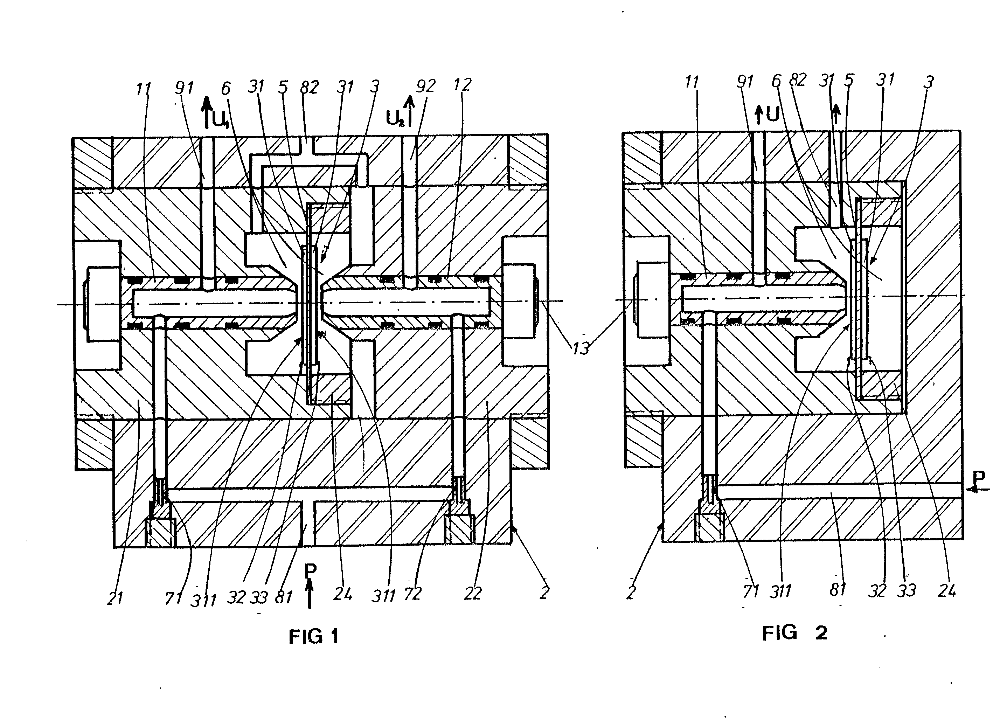

En se référant aux figures 1 à 4, la servovalve selon l'invention
comporte au moins une buse ou gicleur 11 ou 12. Chaque buse est montée fixe
dans le corps 2 et son extrémité conique débouche dans une chambre 6 ménagée
à l'intérieur du corps. Chaque buse 11 ou 12 est alimentée en liquide hydraulique par un conduit 81 et fournit par son orifice un jet de liquide. Chaque
étranglement variable est formé entre une buse et un transducteur piézo électrique 3 comprenant au moins un transducteur élémentaire 31 constitué par
une pastille en céramique piézo électrique enserrée entre deux électrodes
métalliques adjacentes à ses deux faces parallèles planes. Une différence
de potentiel est appliquée entre les électrodes enserrant chaque pastille
ce qui assure une déformation du transducteur. Chaque transducteur élémentaire 31 est maintenu dans le corps 2 de manière que les faces des pastilles
31 soient sensiblement perpendiculaires à l'axe de chaque buse 11 ou 12.
Chaque buse 11 ou 12 fait face, avec un jeu, à une face 311 du transducteur.
La déformation du transducteur 3 déplace, en face du jet sortant de chaque
buse fixe, une face d'obturation qui reste sensiblement perpendiculaire dans
son déplacement à l'axe 13 de la buse et du jet. Ce déplacement règle un orifice annulaire par lequel le liquide hydraulique s'écoule à la sortie de
l'orifice de la buse fixe, du centre vers la périphérie. Le débit de fuite
en aval des buses 11 et 12 est évacué de la chambre 6 par une canalisation
82 du corps. Dans les servovalves des figures 1 et 2, le transducteur 3 est
tenu dans la chambre 6 par une membrane métallique élastique 5. Cette membrane d'épaisseur constante a de préférence une forme circulaire et elle est encastrée sur tout son pourtour dans le corps 2, entre deux portées annulaires planes. Le transducteur 3 est constitué de deux transducteurs élémentaires 31 constitués chacun par une pastille circulaire, en forme de disque, revêtue, sur les deux faces, d'électrodes. Chaque pastille est centrée sur l'axe 13 des buses. Les deux pastilles 31 constituant une bilame sont fixées de part et d'autre de la membrane 5 qu'elles enserrent. Elles sont fixées par collage ou par un mode de fixation équivalent, à la membrane.

La surface 311 du transducteur piézo électrique 3 est inférieure à la section de la chambre 6 selon une direction parallèle à la membrane 5. Le transducteur piézo électrique ne couvre qu'une partie de la membrane 5. Une partie de la membrane 5 entourant le transducteur et localisée à l'intérieur de l'encastrement de la membrane dans le corps n'est pas en contact, sur les deux faces, avec le transducteur 3. Cet agencement assure une amplification mécanique.

Les faces 311 extérieures sont séparées, avec jeux, des buses 11 et 12. Les axes piézo-électriques des deux pastilles 31 sont de même sens. Les deux électrodes adjacentes à la membrane métallique 5 sont au potentiel zéro. Lorsque des différences de potentiel sont appliquées par les conducteurs 32, 33 reliés aux électrodes extérieures 311 des pastilles, l'une des pastilles s'allonge parallèlement à la membrane, tandis que l'autre pastille se raccourcit. La bilame s'infléchit.

La servovalve représentée par la figure 1 comporte deux buses 11 et 12 coaxiales à l'axe 13 et donnant deux jets opposés. L'ensemble formé par la membrane 5 et les deux pastilles 31 est monté entre les deux buses 11 et 12. Les buses 11 et 12 sont montées respectivement dans des noyaux 21 et 22 susceptibles de coulisser selon l'axe 13 de manière à permettre le réglage de l'écartement entre les orifices des buses et la membrane métallique 5.

La membrane est serrée entre une bague annulaire 24 et un noyau 21. Chaque buse est alimentée au travers d'un étranglement 71 ou 72 fixe ou calibré. La flexion du transducteur piézo électrique 3 entraine d'une part l'augmentation de la distance entre l'une des buses et la membrane et corrélativement la diminution de la distance entre cette membrane et l'autre buse. Le débit de fuite par l'une des buses augmente tandis que le débit de fuite par l'autre buse diminue. Ceci permet le réglage de la différence de pression entre les sorties d'utilisation 91 et 92 branchées chacune entre l'orifice d'une buse et l'étranglement fixe.

La servovalve de la figure 2 ne comporte qu'une seule buse 11

4

alimentée au travers d'un étranglement fixe 71. Le débit de fuite sortant par la buse 11 est évacué de la chambre 6 par le conduit 82. La sortie 91 comprise entre l'étranglement fixe 71 et l'orifice de la buse 11 permet le contrôle d'une pression.

La servovalve pourrait être utilisée comme étranglement simple, la buse 11 étant alimentée directement sans étranglement fixe.

Dans une variante, le transducteur 3 accolé à la membrane 5 est constitué d'une seule pastille piézo-électrique 31 fixée d'un côté de cette membrane.

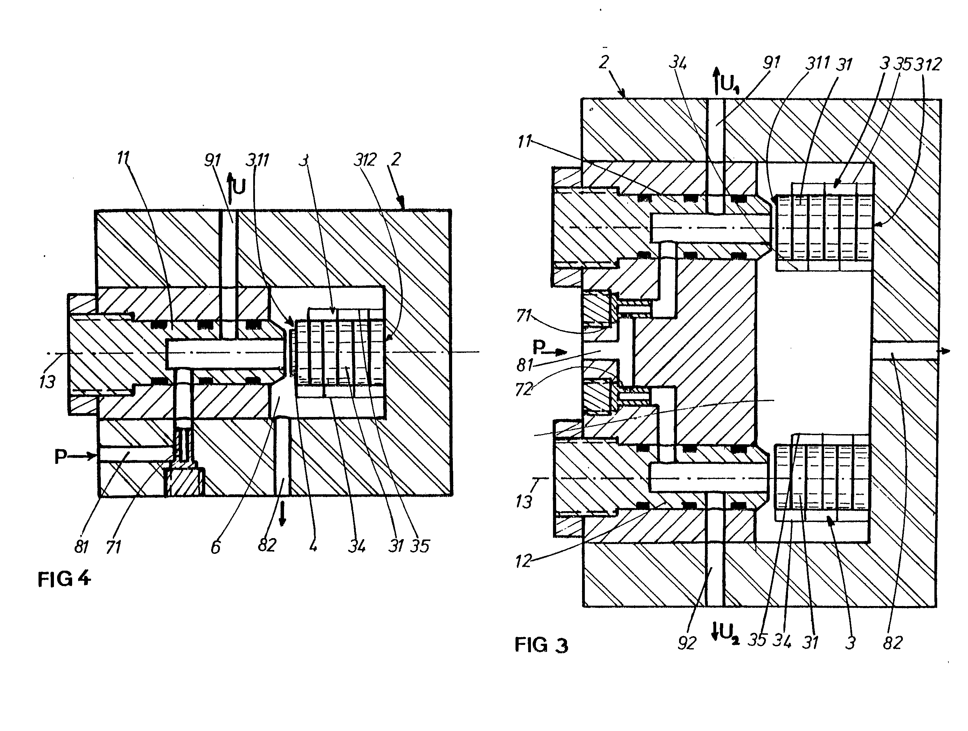

Dans les servovalves représentées par les figures 3 et 4, le transducteur piézo-électrique 3 associé à une buse 11 ou 12 a la forme d'un barreau constitué par un empilage de pastilles piézo électriques 31. Chaque pastille 31 est constituée par un disque en céramique piézo électrique revêtu, sur ses deux faces parallèles, d'électrodes métalliques. Ce barreau cylindrique est monté de manière que son axe soit coaxial à l'axe de la buse associée, les faces planes étant perpendiculaires à l'axe de la buse associée. L'extrémité du barreau orientée du côté de la buse est libre, la face 312 du barreau opposée à la buse étant fixée en appui contre une portée d'appui du corps de la servovalve. Chaque buse fait face à la face plane libre du barreau qui reçoit perpendiculairement le jet. Le changement de longueur du barreau par effet piézoélectrique inverse modifie l'orifice de fuite annulaire.

Pour chaque barreau transducteur 3 un conducteur 34 connecte les électrodes séparées par des intervalles de deux pastilles. Un autre conducteur 35 connecte les électrodes séparées par des intervalles de deux pastilles. Pour chaque pastille 31 une des électrodes est connectée au conducteur 34, l'autre électrode étant connectée au conducteur 35. Chaque conducteur peut être constitué par un feuillard de cuivre. On peut également utiliser des fils électriques collés aux céramiques avec une colle conductrice.

La servovalve représentée par la figure 3 comporte deux buses 11 et 12. Chaque buse alimentée par un étranglement fixe 71 ou 72 fait face à l'extrémité libre d'un barreau. Les deux buses sont montées parallèlement mais peuvent également être montées coaxialement. Les sorties d'utilisation 91 ou 92 sont branchées chacune entre un étranglement variable d'une buse et un étranglement fixe 71 ou 72.

La servovalve de la figure 4 ne comporte qu'une seule buse dont l'orifice fait face à l'extrémité libre du barreau 3 constitué d'un empilage de pastilles piézo électriques 31. La sortie 91 branchée entre l'orifice de la buse et l'étranglement fixe 71 permet le contrôle d'une pression.

Chaque face 311 constituant une électrode soumise au jet de liquide hydraulique peut être protégée par une rondelle résistante collée ou fixée sur la pastille piézo électrique. Par exemple, sur la figure 4 une rondelle 4 est fixée sur la face de la pastille 31 située du côté de la buse.

Dans les modes de réalisation des figures 1 et 2, la tension appliquée entre les électrodes de la pastille 31 et la tension appliquée entre les électrodes de l'autre pastille 31 sont égales et opposées. De même dans les modes de réalisation des figures 3 et 4, les tensions appliquées entre les conducteurs 34 et 35 des barreaux associés aux buses 11 et 12 sont égales et opposées.

Il est bien entendu que l'on peut, sans sortir du cadre de l'invention, imaginer des variantes et des perfectionnements de détails et de même envisager l'emploi de moyens équivalents.

La rondelle résistante peut être fixée sur chaque pastille 31 dans les servovalves représentées sur les figures 1 et 2.

6
REVENDICATIONS

1.-Servovalve électrohydraulique comportant au moins une buse fixée dans un corps et alimentée en liquide hydraulique, caractérisée par le fait qu'elle comporte un transducteur piézo électrique (3) constitué par au moins un transducteur élementaire (31) formé par une pastille en céramique piézo électrique enserrée entre deux électrodes et tenu dans le corps (2) face à l'orifice de la buse (11 ou 12), sensiblement perpendiculairement à l'axe (13) de cette buse, de manière que la déformation du transducteur (3) sous l'action d'un signal électrique appliqué aux électrodes modifie la distance entre l'orifice de ladite buse (11 ou 12) et ledit transducteur (3).

2.- Servovalve selon la revendication 1, caractérisée par le fait que le transducteur (3) est tenu dans le corps par l'intermédiaire d'une membrane métallique élastique (5) à laquelle il est associé.

3.- Servovalve selon la revendication 2, caractérisée par le fait que le transducteur (3) est formé de deux transducteurs élémentaires du type disques.

4.- Servovalve selon la revendication 3, caractérisée par le fait que la membrane métallique est enserrée entre deux transducteurs élémentaires formant bilame.

5.- Servovalve selon l'une quelconque des revendications précédentes, caractérisée par le fait qu'elle comporte, de part et d'autre de l'ensemble formé du transducteur (3) et de la membrane (5), deux buses coaxiales (11 et 12) donnant des jets de sens opposés, chaque buse (11 ou 12) étant alimentée au travers d'un étranglement fixe (71 ou 72).

6.- Servovalve selon l'une quelconque des revendications précédentes, caractérisée par le fait que le transducteur piézo électrique (3) comporte sur la face située du côté du jet, une rondelle (4) résistante.

7.- Servovalve selon l'une quelconque des revendications précédentes caractérisée par le fait que le transducteur (3) est constitué par un empilage de pastilles de céramique piézo électrique (31).

8.- Servovalve selon la revendication 7, caractérisée par le fait qu'elle comporte deux buses alimentées chacune au travers d'un orifice fixe (71-72) et associées chacune à un empilage de pastilles de céramique piézo électrique (31).

FIG 1

FIG 2

1/2

0046431

FIG 4

FIG 3

00464311

Office européen des brevets

**RAPPORT DE RECHERCHE EUROPEENNE**

004643 1
Numéro de la demande

EP 81 40 1279

| Catégorie | Citation du document avec indication, en cas de besoin, des parties pertinentes | Revendication concernée |
|---|---|---|
| **DOCUMENTS CONSIDERES COMME PERTINENTS** | | |
| X | DE - A - 2 511 752 (FOKKER) <br> * Page 3, ligne 21 - page 4, ligne 25; revendications 1-3 * | 1-5 |
| X | GB - A - 1 206 060 (HELI-COIL CORPORATION CONTROLS DIVISION) <br> * Page 1, colonne de gauche, ligne 47 - page 2, colonne de gauche, ligne 29; figure 1 * | 1,6 |
| X | GB - A - 1 217 225 (AUTOMOTIVE PRODUCTS) <br> * En entier * | 1,7 |
| X | FR - A - 1 514 669 (FISCHER GOVERNOR COMPANY) <br> * Page 4, colonne de gauche, lignes 1-39; résumé; figure 3 * | 1 |
| | MACHINE DESIGN, vol. 43, no. 2, janvier 21, 1971 Cleveland, US "Flapping crystal generates fluidic signals", page 93 <br> * En entier * | 1 |
| A | FR - A - 2 188 771 (THE BRITISH OXYGEN COMPANY LTD.) | |

**CLASSEMENT DE LA DEMANDE (Int. Cl.³)**

F 15 B 13/02
        5/00
F 15 C 3/14
F 16 K 31/00

**DOMAINES TECHNIQUES RECHERCHES (Int. Cl.³)**

F 15 B
F 15 C
F 16 K

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 14-09-1981 | THOMANN |

OEB Form 1503.1  06.78